**Europäisches Patentamt**

**European Patent Office**

**Office européen des brevets**

(19)

(11) Publication number : **0 410 968 B1**

# (12) EUROPEAN PATENT SPECIFICATION

(45) Date of publication of patent specification :
26.02.92 Bulletin 92/09

(21) Application number : 89902659.5

(22) Date of filing : 23.02.89

(86) International application number :
PCT/IT89/00009

(87) International publication number :
WO 89/09423 05.10.89 Gazette 89/24

(51) Int. Cl.⁵ : **G02B 27/22,** G03B 35/00,
G02B 27/02

(54) **THREE-DIMENSIONAL IMAGE PROJECTOR.**

(30) Priority : 31.03.88 IT 2005388
23.12.88 IT 2306988

(43) Date of publication of application :
06.02.91 Bulletin 91/06

(45) Publication of the grant of the patent :
26.02.92 Bulletin 92/09

(84) Designated Contracting States :
DE FR GB IT

(56) References cited :
DE-A- 3 013 959
DE-A-26 125 669
GB-A- 675 549
US-A- 4 671 625

(73) Proprietor : LASER 681 S.R.L.
Viale Tunisia, 16
I-20124 Milano (IT)

(72) Inventor : ORLANDI, Raul, Maria
Via Metauro, 5
I-20100 Milano (IT)

(74) Representative : Arena, Giovanni
Viale Certosa 135
I-20151 Milano (IT)

# Description

The present invention concerns a three-dimensional image former and more precisely an optical device by means of which three-dimensional images can be viewed in the space in front of it.

At present, reproduction of stereoscopic images of an object may be achieved by means of more or less complex systems based substantially on the use of two flat stereoscopic images (of the object itself) and of suitable devices (such as prisms, striped screens, glasses with differently polarized lenses, etc.) which consent each of the two stereoscopic images to be viewed by one eye, or on the use of holograms obtained from a two-dimensional photosensitive emulsion impressed by interference between two laser beams, one of which coming directly from the light source and the other reflected from the object.

These systems require sophisticated and costly techniques and/or do not allow prolonged viewing of the three-dimensional images without tiring the eyes of the viewer, do not always allow the object to be viewed from different angles, do not allow the immediate projection of any object, and do not enable the object to be viewed in its natural colours and in movement.

Another solution, described in DE, A, 2612566, foresees a device for forming a three-dimensional image in the space in front of it. This device comprises a chamber with non-reflecting walls, designed to contain the object to be imaged, a lens occupying an aperture in one wall of the chamber, with its optical axis directed toward the object, and some light sources located in the chamber to illuminate the object and suitably screened from the lens. This solution obviates many disadvantages of previous systems, but still presents some drawbacks such as the fact that it is not of practical use, being the image formed as an upside-down image of the object inside the chamber, and being the chamber rather encumbering.

The purpose of this invention is to remedy the aforementioned drawbacks by providing a three-dimensional image former whereby any object can be viewed in real time, in its natural colours and, if necessary, in movement, without calling for particularly costly equipment and without tiring the eys of the viewer, who is able to gaze quite naturally at the three-dimensional image of the object imaged in the space in front of the image former.

According to a first embodiment, the image former according to the invention comprises:
– a chamber designed to contain the object to be imaged, having dark, opaque, non-reflecting walls;
– a Fresnel lens occupying an aperture in one wall of the chamber, said lens having a diameter larger than the maximum dimension of the object to be imaged, and a focal distance smaller than the length of the optical path between the object and the lens;
– one or more light sources located in the chamber to illuminate the object and suitably screened from the lens so as not to project diffused light on the latter;

and it is characterized by the fact that:
– one or more optical screens are present, preventing the direct projection of light rays from the illuminated object onto the Fresnel lens;
– the length of the optical path between the object to be imaged and the lens is such that the image produced by the lens is situated at a distance from the latter equal to the diameter of the lens or smaller;
– the diameter of the lens is more than three times the maximum dimension of the object to be imaged;
– the optical path between the object and the lens is formed by means of one or more couples of flat mirrors positioned so as to fold the optical axis of the lens towards the object.

Other inventive solutions are given further on, in the claims.

The features of the invention will be more clearly evident from the following examples of non-restrictive embodiments described with reference to the accompanying drawings, in which:

Figs.1 and 2: show a image former according to the prior art;

Figs.3,4 and 5: show a first embodiment of a image former according to the invention;

Figs.6: shows an automatic system for controlling the illumination of the object to be imaged;

Fig.7: shows a second embodiment of a image former according to the invention.

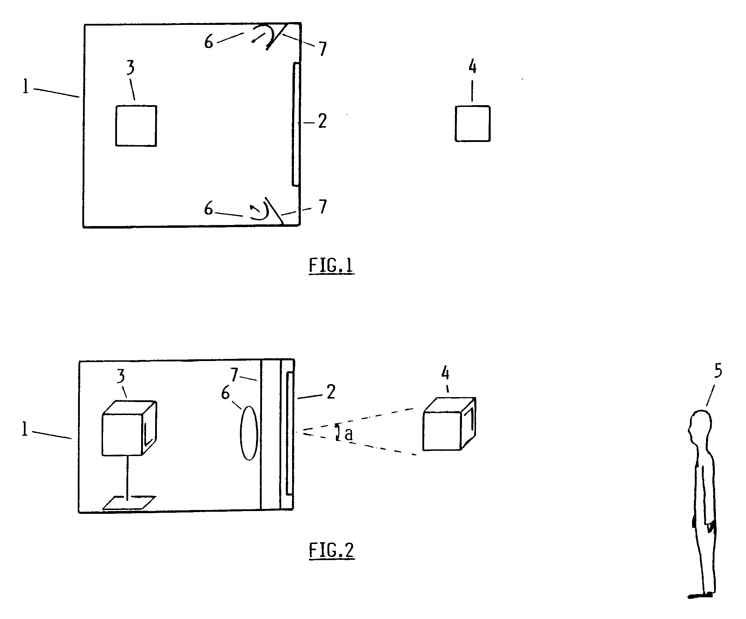

Figs.1 and 2 show a schematic representation of a cross-sectional view (on a horizontal and a vertical plane, respectively) of an embodiment of a image former according to the prior art, in which the following references are used to indicate the various parts:

1: substantially parallelepipedon-shaped chamber with opaque walls with a dark-coloured non-reflecting internal surface;

2: Fresnel lens;

3: object to be viewed three-dimensionally; in this specific case, it consists of a cube with an L printed on the side facing the lens;

4: real image, with three-dimensional effects, of the object 3;

5: viewer;

6: light sources for illuminating the object 3 (with light having a spectrum as similar as possible to the solar spectrum);

7: screens for protecting the light sources 6, in order to prevent diffused light from being projected onto the lens 2.

When the light sources 6 are turned off, the lens 2 is seen by the viewer as a dark screen. However, as soon as the light sources are turned on, the viewer sees, in front of the screen consisting of the lens, the (upside down) three-dimensional image of the object, in its natural colours, so as to give him the impression of standing in front of the object itself, which appears to hover in the space in front of the three-dimensional image former.

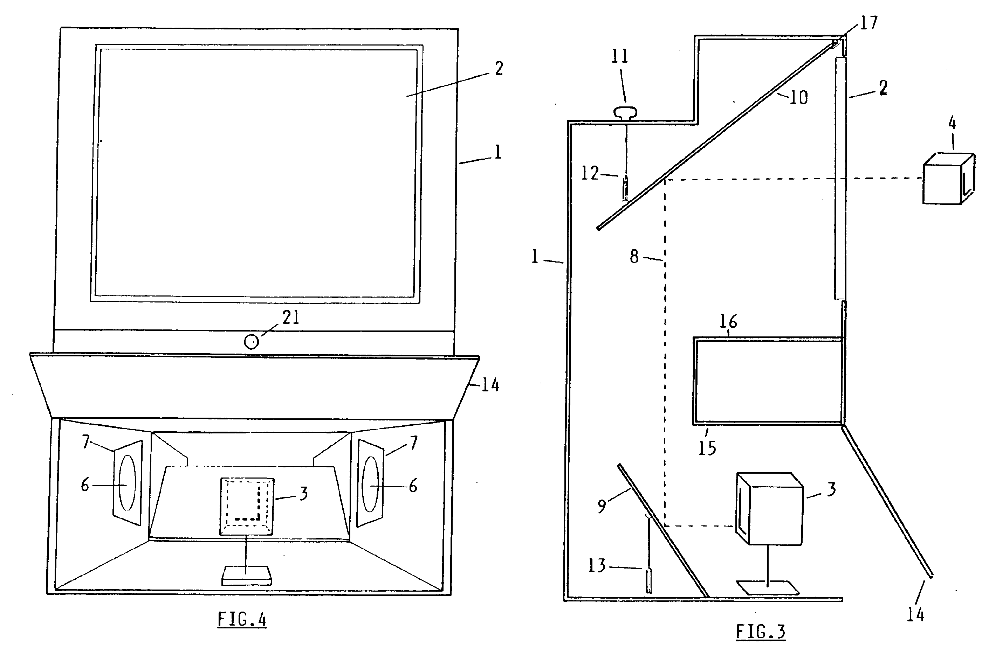

A first embodiment of a three-dimensional image former according to the invention is schematically illustrated in Figs.3 (cross-sectional view) and 4 (frontal view), in which the parts indicated by references used previously in Figs. 1 and 2 have equivalent functions. The remaining parts are:

9 and 10: flat mirrors;

11: knob for adjusting the angle of inclination of the mirror 10;

12 and 13: screws for adjusting the angle of inclination of the mirrors 10 and 9;

14: door giving access to the compartment containing the object to be imaged, which normally remains closed when the image former is in operation (in Fig.3 the door is shown half open and in Fig. 4 wide open);

15: wall screening the object 3 from the mirror 10;

16: wall screening the mirror 9 from the lens 2.

In this embodiment the mirrors 9 and 10 perform multiple functions:

– to project an upside down image of the object 3 onto the lens 2 so that the lens 2 can produce an upright three-dimensional image outside;

– to make the luminous rays projected from the object 3 onto the lens follow a C-shaped route (see route 8 in Fig.3), so that, with a lens of the same diameter and an optical route of the same overall length, the apparatus is more compact and less bulky than the apparatus referred to in Figs. 1 and 2;

– to enable the position of the formed image to be adjusted vertically, by varying the angle of inclination of the mirror 10 by means of the knob 11.

With regard to the latter function of the mirrors it can be seen that when the mirror 10 (which is hinged by 17) is rotated downwards, the image 4 also shifts in the same direction.

It can also be seen that when the two mirrors 9 and 10 are perpendicular to each other, then any vertical plane of the object 3 is imaged out of the lens 2 still as a vertical plane. Conversely, when the mirrors form an angle of (90° + B), then the vertical plane of the object 3 printed with the letter L is imaged out of the lens with an inclination on the vertical having an amplitude of 2·B.

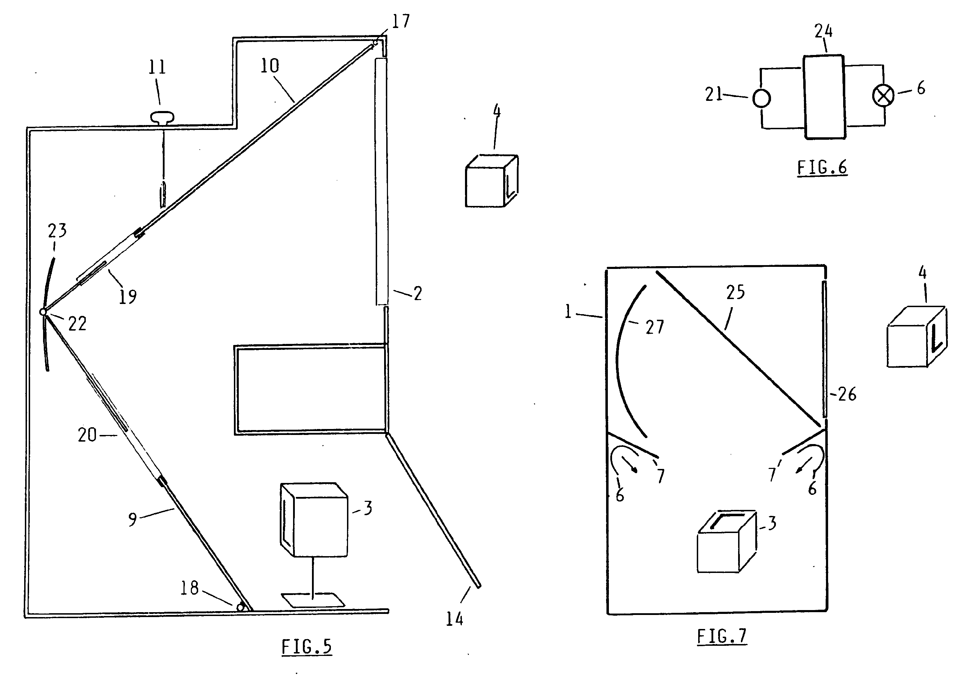

Consequently, if it is required to adjust the vertical position of the image of the object so that it automatically respects the verticality of the planes, it is necessary to improve the system for adjusting the inclination of the mirrors, as shown in the schematic example of Fig.5. According to this sketch the mirrors are secured on one side to the hinges 17 and 18 and on the other to one end of the rods 19 and 20. The other end of the rods, which can be lengthened or shortened telescopically, is secured to the hinge 22. Said hinge can slide along the circular guide 23, whose centre of curvature coincides with the midpoint of the segment having its ends in 17 and 18, so that each swinging of the mirror 10, caused by turning the knob 11, corresponds to a swinging of the mirror 9, which ensures the perpendicularity of the two mirrors.

The previously described apparatus can operate in environments subject to any lighting conditions whatsoever, either natural or artificial. However, in order to have a clear view of the image the illumination of the object 3 must always be adapted to suit the degree of luminosity of the environment. This can be achieved by providing projectors with lamps with adjustable brightness, which can be adjusted by means of a special control circuit operated by hand (by means of an external control knob, not shown in the figure), or operated by an automatic control system. In this latter case, it will be sufficient to provide (in a per se known way) an input control circuit 24, activated by a signal from a photoconductive cell 21 located on the front panel of the image former in the vicinity of the Fresnel lens (see Fig.4 and Fig.6).

The sensation of three-dimensionality is enhanced when the viewer moves sideways with respect to the image of the object: in this case, in fact, the viewer becomes aware of the change in perspective which normally accompanies a change in parallax. The extent to which the viewer can move sideways (or even vertically) is, of course, limited by the field of visibility of the image which, with close approximation, can be likened to a cone with its apex in the optical centre of the lens (the angle at the top of the cone has been indicated by the reference "a" in Fig. 2).

In order to enable the image former to give satisfactory results, the lens and the object must fulfill certain dimensional requirements.

In fact, so as not to have an excessively narrow field of visibility (angle "a") it is necessary for the focal distance of the lens to be within the same order of magnitude as the diameter of the lens itself or smaller. Moreover, the object must also be placed at a given distance from the lens so that the distance between the formed image and the lens is in the same order of magnitude as the abovementioned diameter or smaller. The nearer the formed image is from the lens the wider the aforesaid field of visibility will be.

Moreover, the lens must have a larger diameter than the maximum dimension of the object. The best results are obtained with a lens having a diameter at least three times that of the aforesaid maximum dimension of the object.

Fig.7 shows a cross sectional view of a second embodiment of a three-dimensional image former according to the invention, in which reference 27 indicates a convex spherical mirror, 25 indicates a semitransparent flat mirror tilted at 45° and 26 indicates a transparent or semitransparent screen. In this apparatus the semitransparent mirror 25 performs several functions, such as that of:

– limiting the overall dimensions of the apparatus while keeping the route of the optical rays from the object to the spherical mirror the same;

– enabling the flat mirror to reflect the object and then project the rays onto the spherical mirror;

– enabling (thanks to its semitransparency) the image created by the spherical mirror to be formed outside, upright;

– preventing the viewer outside the apparatus from seeing in.

The apparatuses referred to in the examples shown in Figs.3, 5 and 7 are also subjected to identical or similar dimensional conditions as those described for the lens and the object of Fig. 2.

In addition to the aforsaid conditions, the three-dimensional image produced by the apparatuses according to the invention is, of course, also subject to the optical laws which govern the formation of images in the lenses and in the mirrors, whereby a ray which strikes the lens or the spherical mirror in a direction parallel to the optical axis emerges from the lens or the mirror in the direction of focus, etc.

## Claims

1. Three-dimensional image former by means of which a three-dimensional image of an object can be formed outside and viewed in the space in front of the image former, comprising:

– a chamber (1) designed to contain the object (3) to be imaged, having dark, opaque, non-reflecting walls;

– a Fresnel lens (2) occupying an aperture in one wall of the chamber, said lens (2) having a diameter larger than the maximum dimension of the object (3) to be imaged, and a focal distance smaller than the length of the optical path between the object and the lens;

– one or more light sources (6) located in the chamber to illuminate the object (3) and suitably screened from the lens (2) so as not to project diffused light on the latter;

characterized by the fact that:

– one or more optical screens (15,16) are present, preventing the direct projection of light rays from the illuminated object (3) onto the Fresnel lens (2);

– the length of the optical path between the object (3) to be imaged and the lens (2) is such that the image produced by the lens is situated at a distance from the latter equal to the diameter of the lens or smaller;

– the diameter of the lens (2) is more than three times the maximum dimension of the object (3) to be imaged;

– the optical path between the object (3) and the lens (2) is formed by means of one or more couples of flat mirrors (9,10) positioned so as to fold the optical axis of the lens towards the object.

2. Three-dimensional image former as claimed in Claim 1, characterized by the fact that one or more of the mirrors (9,10) is movable, inasmuch as its inclination with respect to the incident optical axis can be varied.

3. Three-dimensional image former as claimed in Claim 2, characterized by the fact that the mirrors (9,10) are two in number, that they are movable and are secured to each other by means fit for ensuring their reciprocal perpendicularity in every possible position.

4. Three-dimensional image former by means of which a three-dimensional image of an object can be formed outside and viewed in the space in front of the image former, comprising:

– a chamber (1) designed to contain the object (3) to be imaged, having dark, opaque, non-reflecting walls;

– an aperture in one wall of the chamber having dimensions more than three times larger than the maximum dimensions of the object (3) to be imaged;

– a concave spherical mirror (27) having a diameter more than three times larger than the maximum dimension of the object (3) to be imaged, located inside the chamber (1) in front of the aforesaid aperture;

– a flat semitransparent mirror (25) positioned between the concave mirror (27) and the aperture and oriented so as to reflect the optical axis of the spherical mirror in the direction of the object (3);

– the object (3) to be imaged being positioned so that its distance from the concave mirror (27), measured along the route of its optical axis, is greater than the focal distance of the same;

– one or more light sources (6) located in the chamber to illuminate the object (3) and suitably screened so as not to project diffused light on the spherical mirror (27), the flat semitransparent mirror (25) and said aperture.

5. Three-dimensional image former as claimed in Claim 4, characterized by the presence of another semitransparent mirror (26), positioned on the aforesaid aperture.

6. Three-dimensional image former as claimed in Claim 1 or 2 or 3, characterized by the fact that the light sources (6) present brightness adjustable by means of an automatic control system with an input control circuit (24) activated by a signal from a photoconductive cell (21) located on the front panel of the image former in the vicinity of the Fresnel lens (2).

## Patentansprüche

1. 3D-Bilderzeugungseinrichtung, mit der ein dreidimensionales Bild eines Objekts außerhalb erzeugt und in einem Raum vor der Bilderzeugungseinrichtung betrachtet werden kann, mit
   – einer Kammer (1), die für die Aufnahme des abzubildenden Objekts (3) ausgelegt ist und dunkle, opake, nicht-reflektierende Wände hat,
   – einer Fresnellinse (2), welche eine Öffnung in einer Wand der Kammer einnimmt und einen Durchmesser hat, der größer ist als die maximale Abmessung des abzubildenden Objekts (3) sowie eine Brennweite, die kleiner ist als die Länge des Strahlenganges zwischen dem Objekt und der Linse;
   – einer oder mehreren Lichtquellen (6), die in der Kammer zur Beleuchtung des Objekts (3) angeordnet und geeignet gegen die Linse (2) abgeschirmt sind, so daß kein Streulicht auf diese fällt,
   dadurch gekennzeichnet, daß
   – einer oder mehrere optische Schirme (15, 16) vorgesehen sind, die eine direkte Projektion von Lichtstrahlen vom beleuchteten Objekt (3) auf die Fresnellinse (2) verhindern;
   – die Länge des Strahlenganges zwischen dem abzubildenden Objekt (3) und der Linse (2) so bemessen ist, daß das durch die Linse erzeugte Bild einen Abstand von dieser hat, der gleich dem Durchmesser der Linse oder kleiner ist;
   – der Durchmesser der Linse (2) mehr als das dreifache der maximalen Abmessung des abzubildenden Objekts (3) beträgt, und
   – der Strahlengang zwischen dem Objekt (3) und der Linse (2) durch ein oder mehrere Paare von ebenen Spiegeln (9, 10) gebildet wird, die so angeordnet sind, daß sie die optische Achse der Linse zum Objekt hin knicken.

2. 3D-Bilderzeugungseinrichtung nach Anspruch 1, dadurch gekennzeichnet, daß einer oder mehrere der Spiegel (9, 10) beweglich und hinsichtlich ihrer Neigung bezüglich der ankommenden optischen Achse verstellbar sind.

3. 3D-Bilderzeugungseinrichtung nach Anspruch 2, dadurch gekennzeichnet, daß die Anzahl der Spiegel gleich zwei ist und daß sie durch eine Einrichtung beweglich und miteinander verbunden sind, die ihre gegenseitige Senkrechtstellung in jeder möglichen Position gewährleistet.

4. 3D-Bilderzeugungseinrichtung, durch die ein dreidimensionales Bild eines Objekts außerhalb erzeugt und im Raum vor der Bilderzeugungseinrichtung betrachtet werden kann, mit
   – einer Kammer (1), die für die Aufnahme des abzubildenden Objekts (3) ausgelegt ist und dunkle, opake, nicht-reflektierende Wände aufweist;
   – einer Öffnung in einer Wand der Kammer, welche Abmessungen hat, die mehr als das dreifache der maximalen Abmessung des abzubildenden Objekts (3) betragen;
   – einem konkaven sphärischen Spiegel (27), dessen Durchmesser mehr als das dreifache der maximalen Abmessung des abzubildenden Objekts (3) beträgt und der innerhalb der Kammer (1) vor der erwähnten Öffnung angeordnet ist;
   – einem ebenen, halbdurchlässigen Spiegel (25), der zwischen dem konkaven Spiegel (27) und der Öffnung angeordnet und so orientiert ist, daß er die optische Achse des sphärischen Spiegels in Richtung auf das Objekt (3) umlenkt;
   – wobei das abzubildende Objekt (3) so angeordnet ist, daß sein Abstand vom konkaven Spiegel (27), längs des Verlaufes seiner optischen Achse, größer als seine Brennweite ist;
   – einer oder mehreren Lichtquellen (6), die in der Kammer zur Beleuchtung des Objekts (3) angeordnet und geeignet abgeschirmt sind, so daß kein Streulicht auf den sphärischen Spiegel (27), den halbdurchlässigen Spiegel (25) und die Öffnung fällt.

5. 3D-Bilderzeugungseinrichtung nach Anspruch 4 gekennzeichnet durch einen weiteren halbdurchlässigen Spiegel (26), der an der erwähnten Öffnung angeordnet ist.

6. 3D-Bilderzeugungseinrichtung nach Anspruch 1 oder 2 oder 3, dadurch gekennzeichnet, daß die Lichtquellen (6) in ihrer Helligkeit durch ein automatisches Steuersystem mit einem Steuereingangskreis (24) steuerbar sind, der durch ein Signal von einer photoleitfähigen Zelle (21) aktiviert wird, die sich auf der Vorderwand der Bilderzeugungseinrichtung in der Nähe der Fresnellinse (2) befindet.

## Revendications

1. Système de formation d'image en trois dimensions par lequel une image tridimensionnelle de l'objet peut être formée à l'extérieur et observée dans l'espace en face du système de formation d'image, comprenant :
   – une chambre (1) pour contenir l'objet (3) dont on veut former l'image ayant des parois sombres opaques et non réfléchissantes ;
   – une lentille de Fresnel (2) occupant une ouverture dans une paroi de la chambre, cette lentille (2) ayant un diamètre plus grand que la dimension maximale de l'objet (3) dont on veut former l'image, et une distance focale inférieure à la longueur du chemin optique entre l'objet et la lentille ;
   – une ou plusieurs sources lumineuses (6) disposées dans la chambre pour éclairer l'objet (3) et convenablement écrantées par rapport à la lentille (2) pour ne pas projeter de lumière diffusée sur cette dernière ;

caractérisé en ce que :

– un ou plusieurs écrans optiques (15, 16) sont présents, empêchant la projection directe des rayons lumineux à partir de l'objet illuminé (3) vers la lentille de Fresnel (2) ;

– la longueur du chemin optique entre l'objet (3) dont on veut former l'image et la lentille (2) est telle que l'image produite par la lentille est située à une distance de cette dernière égale ou inférieure au diamètre de la lentille ;

– le diamètre de la lentille (2) est plus de trois fois la dimension maximale de l'objet (3) dont on veut former l'image ;

– le chemin optique entre l'objet (3) et la lentille (2) est formé par un ou plusieurs couples de miroirs plans (9, 10) positionnés de façon à replier l'axe optique de la lentille vers l'objet.

2. Système de formation d'image tridimensionnelle selon la revendication 1, caractérisé par le fait qu'un ou plusieurs des miroirs ( 9, 10 ) sont mobiles, c'est-à-dire que leur inclinaison par rapport à l'axe optique d'incidence peut être modifiée.

3. Système de formation d'image tridimensionnelle selon la revendication 2, caractérisé par le fait que les miroirs ( 9, 10 ) sont au nombre de deux, qu'ils sont mobiles, et qu'ils sont fixés l'un à l'autre par des moyens propres à assurer leur perpendicularité mutuelle dans toute position possible.

4. Système de formation d'image trimensionnelle par lequel une image tridimensionnelle d'un objet peut être formée vers l'extérieur et observée dans l'espace en face du système de formation d'image, comprenant :

– une chambre (1) prévue pour contenir l'objet (3) dont on veut former l'image ayant des parois sombres, opaques et non réfléchissantes ;

– une ouverture dans une paroi de la chambre ayant des dimensions supérieures à trois fois les dimensions maximales de l'objet (3) dont on veut former l'image ;

– un miroir sphérique concave (27) ayant un diamètre plus de trois fois supérieur à la dimension maximale de l'objet (3) dont on veut former l'image, disposé à l'intérieur de la chambre (1) en face de la susdite ouverture ;

– un miroir plan semi-transparent (25) positionné entre le miroir concave (27) et l'ouverture et orienté de façon à réfléchir l'axe optique du miroir sphérique dans la direction de l'objet (3) ;

– l'objet (3) dont on veut former l'image étant disposé de sorte que sa distance au miroir concave (27), mesurée selon le trajet de son axe optique, est supérieure à la distance focale de ce miroir ;

– une ou plusieurs sources lumineuses (6) disposées dans la chambre pour éclairer l'objet (3) et convenablement écrantées pour ne pas projeter de lumière diffusée sur le miroir sphérique ( 27 ), le miroir plan semi-transparent (25) et ladite ouverture.

5. Système de formation d'image tridimensionnelle selon la revendication 4, caractérisé par la présence d'un autre miroir semi-transparent (26) placé sur la susdite ouverture.

6. Système de formation d'image tridimensionnelle selon la revendication 1, 2 ou 3, caractérisé par le fait que les sources lumineuses (6) présentent une luminosité réglable par un système de commande automatique avec un circuit de commande d'entrée (24) actionné par un signal en provenance d'une cellule photoconductrice (21) disposée sur le panneau avant du système de formation d'image au voisinage de la lentille de Fresnel (2).

FIG.1

FIG.2

FIG.3

FIG.4

FIG.5

FIG.6

FIG.7